# EUROPÄISCHE PATENTANMELDUNG

(11) **EP 0 825 421 A2**
(43) Veröffentlichungstag der Anmeldung: **25.02.1998**
(21) Anmeldenummer: 97810520.3
(22) Anmeldetag: 22.07.1997
(51) Int. Cl.: G01F 1/32

(54) **Wirbel-Strömungsaufnehmer mit einem zylindrischen Staukörper**

(30) Priorität: 21.08.1996 EP 96113383
(71) Anmelder: Endress + Hauser Flowtec AG, CH-4153 Reinach BL 1 (CH)
(72) Erfinder: Oertel, Herbert, Prof. Dr.-Ing. habil., 76275 Ettlingen (DE); Ohle, Frank, Dr. rer. nat., 79585 Steinen (DE)
(74) Vertreter: Morstadt, Volker, Dipl.-Ing. c/o Endress + Hauser Flowtec AG

(57) **Zusammenfassung**

Zur Erhöhung der Meßgenauigkeit von Wirbel-Strömungsaufnehmern (1), die der Messung der Strömungsgeschwindigkeit bzw. des Volumendurchflusses eines in einem Meßrohr (2) fließenden Fluids dienen, haben diese einen im Meßrohr angeordneten zylindrischen, einen kreisförmigen Querschnitt und eine Mantelfläche (41) aufweisenden Staukörper (4), die mindestens teilweise aufgerauht ist, und einen einzigen Wirbelsensor (5), der auf von den Wirbeln erzeugte Druckschwankungen anspricht. Die Aufrauhungen können als gleichmäßig oder ungleichmäßig auf die Mantelfläche verteilte muldenartige Vertiefungen (42) ausgebildet sein.

## Beschreibung

Die Erfindung betrifft einen Wirbel-Strömungsaufnehmer zur Messung der Strömungsgeschwindigkeit bzw. des Volumendurchflusses eines in einem Meßrohr in einer Strömungsrichtung fließenden Fluids mit einem im Meßrohr angeordneten zylindrischen Staukörper.

Bei Betrieb eines derartigen Wirbel-Strömungsaufnehmers entsteht bekanntlich stromabwärts des Staukörpers eine Kármán'sche Wirbelstraße, deren Druckschwankungen von einem Wirbelsensor in ein elektrisches Signal umgeformt werden, dessen Frequenz proportional zum Volumendurchfluß ist.

Zylindrische Staukörper bei Wirbel-Strömungsaufnehmern wurden schon in deren Frühzeit beschrieben und untersucht, wie z.B. die US-A 37 20 104 zeigt, die der DE-A 20 41 178 entspricht. Die technische Entwicklung wandte sich jedoch von den zylindrischen Staukörpern zugunsten dreieck- bzw. trapezförmiger ab, wohl weil die mit den ersteren erzielbare Meßgenauigkeit zu gering war.

Erst neuerdings wird der zylindrische Staukörper wieder aufgegriffen, wie die JP-A 8 - 5419 und deren englischer Abstract zeigen.

Darin ist ein Wirbel-Strömungsaufnehmer zur Messung der Strömungsgeschwindigkeit bzw. des Volumendurchflusses eines in einem Meßrohr fließenden Fluids beschrieben
- mit einem im Meßrohr angeordneten zylindrischen, einen kreisförmigen Querschnitt und eine glatte Mantelfläche aufweisenden Staukörper,
- mit drei parallelen auf die Höhe des Staukörpers gleichverteilten Durchgangsbohrungen, deren jeweilige Achse parallel zur Strömungsrichtung ist, und
- mit fünf Wirbelsensoren, von denen drei Wirbelsensoren im Staukörper angeordnet sind sowie mit jeweils einer Durchgangsbohrung in Verbindung stehen und von denen jeweils einer der beiden anderen Wirbelsensoren auf einer zur Strömungsrichtung und zur Längsachse des Staukörpers senkrechten Achse an dessen Mantelfläche einander gegenüberliegend angeordnet sind.

Diese Ausbildung soll dem Zweck dienen, einerseits bei langsamen Flußgeschwindigkeiten die Meßgenauigkeit durch Mittelung der Signale der drei im Staukörper angeordneten Wirbelsensoren zu erhöhen bzw. andererseits bei schnellen Flußgeschwindigkeiten die Signale der zwei an der Mantelfläche angeordneten Wirbelsensoren auszunutzen und so insgesamt Messungen in einem weiten Bereich der Flußgeschwindigkeitzu ermöglichen.

Bohrungen im Staukörper sind immer der Gefahr ausgesetzt, daß sich darin wegen ihres geringen Lumens Ablagerungen von Stoffen bilden, die im Fluid enthalten sind. Diese Ablagerungen können mit der Zeit dazu führen, daß die Bohrungen zuwachsen und somit verstopft werden. Dies ist ganz besonders dann nachteilig, wenn wie bei der in der JP-A 8 - 5418 vorbeschriebenen Anordnung mit den Bohrungen Wirbelsensoren in Verbindung stehen.

Es ist eine Aufgabe der Erfindung, mit anderen Mitteln als den vorbeschriebenen eine Erhöhung der Meßgenauigkeit von Wirbel-Strömungsaufnehmern mit zylindrischem Staukörper zu erreichen, wobei zugleich eine geringere Anzahl als die vorbeschriebene Anzahl von Wirbelsensoren erforderlich sein soll.

Zur Lösung dieser Aufgabe besteht die Erfindung in einem Wirbel-Strömungsaufnehmer zur Messung der Strömungsgeschwindigkeit bzw. des Volumendurchflusses eines in einem Meßrohr fließenden Fluids
- mit einem im Meßrohr angeordneten zylindrischen, einen kreisförmigen Querschnitt und eine Mantelfläche aufweisenden Staukörper, die mindestens teilweise aufgerauht ist, und
- mit einem einzigen Wirbelsensor, der auf von den Wirbeln erzeugte Druckschwankungen anspricht.

Nach einer ersten Ausgestaltung der Erfindung ist die Mantelfläche des zylindrischen Staukörpers mit muldenartigen Vertiefungen versehen.

Nach einer ersten weiteren Ausgestaltung der Erfindung haben die muldenartigen Vertiefungen untereinander die gleiche Form und sind gleichmäßig auf die Mantelfläche verteilt.

Nach einer zweiten weiteren Ausgestaltung der Erfindung haben die muldenartigen Vertiefungen untereinander die gleiche Form und sind ungleichmäßig, insb. stochastisch, auf die Mantelfläche verteilt.

Nach einer dritten weiteren Ausgestaltung der Erfindung sind die muldenartigen Vertiefungen lediglich auf derjenigen Seite des Staukörpers vorgesehen, auf der er im Betrieb vom Fluid angeströmt wird.

Nach einer Weiterbildung dieser Ausgestaltung sind die muldenartigen Vertiefungen lediglich in einem Mantelsektor vorgesehen sind, dessen im Querschnitt vorhandener Winkel kleiner als 180° ist.

Nach einer ersten Weiterbildung der Erfindung ist der Staukörper mit seinem jeweilige Ende entlang seines Umfangs mit der Innenwand des Meßrohrs fest verbunden.

Nach einer zweiten Weiterbildung der Erfindung ist der Staukörper mit seinem jeweiligen Ende entlang seines Umfangs mit einem an der Innenwand des Meßrohrs angebrachten Podest verbunden.

Nach einer dritten Weiterbildung der Erfindung ist der Staukörper an seinem jeweiligen Ende mit einem verjüngten zylindrischen Endteil versehen, das entlang seines Umfangs mit der Innenwand des Meßrohrs verbunden ist.

Die Erfindung und weitere Vorteile werden nun anhand von Ausführungsbeispielen näher erläutert, die in den Figuren der Zeichnung dargestellt sind.
- Fig. 1: zeigt schematisch im Längsschnitt einen Wirbel-Strömungsaufnehmer mit einem zylindrischen Staukörper,
- Fig. 2: zeigt schematisch in Draufsicht die Mantelfläche des Staukörpers mit gleichverteilten muldenartigen Vertiefungen als Aufrauhung,
- Fig. 3: zeigt schematisch in Draufsicht die Mantelfläche des Staukörpers mit nicht gleichverteilten muldenartigen Vertiefungen als Aufrauhung,
- Fig. 4: zeigt schematisch einen Querschnitt des Staukörpers mit den muldenartigen Vertiefungen auf nur einem Teil der Mantelfläche,
- Fig. 5: zeigt schematisch einen Staukörper mit verjüngtem Endteil, und
- Fig. 6: zeigt schematisch einen Staukörper mit einem endseitigen Podest.

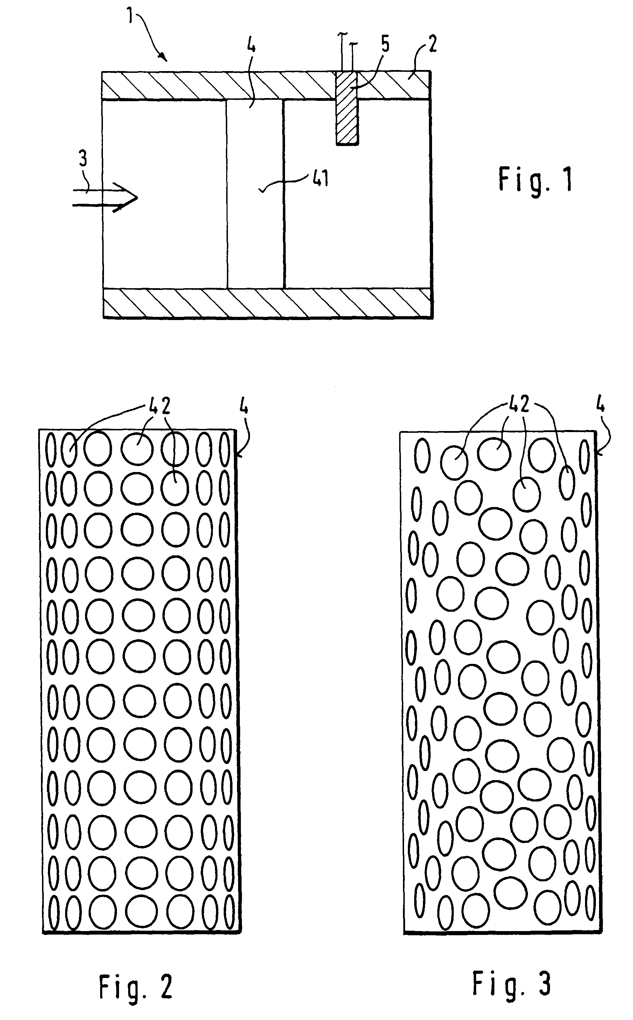

Im Ausführungsbeispiel der Fig. 1 ist schematisch im Längsschnitt ein Wirbel-Strömungsaufnehmer 1 gezeigt. Er enthält ein Meßrohr 2, in dem ein zu zu messendes Fluid, z.B. eine Flüssigkeit, ein Gas oder ein Dampf, insb. Wasserdampf, in einer vorgegebenen Strömungsrichtung fließt, wie durch den Pfeil 3 veranschaulicht ist.

Im Meßrohr 2 ist ein Staukörper 4 befestigt, insb. dadurch, daß er mit der Innenwand des Meßrohrs verschweißt ist. Der Staukörper 4 dient der Erzeugung von Kármán'schen Wirbeln und ist zylindrisch. Ferner hat er einen kreisförmigen Querschnitt und - wie jeder Zylinder per definitionem - eine Mantelfläche 41, die entsprechend der Erfindung aufgerauht ist, so daß sie eine vorgebbare Rauhigkeit hat. Diese ist jedoch in Fig. 1 wegen deren Übersichtlichkeit noch nicht dargestellt.

Im Ausführungsbeispiel der Fig. 1 ist stromabwärts vom Staukörper 4 ein Wirbelsensor 5 in der Wand des Meßrohrs 2 angeordnet, der auf von den Wirbeln im Fluid erzeugte Druckschwankungen anspricht. Als Wirbelsensoren 5 können die bei Wirbel-Strömungsaufnehmern hierfür üblichen Arten von auf Druck ansprechenden elektromechanischen Wandlern dienen, wie z.B. kapazitive, piezoelektrische oder induktive, insb. elektrodynamische, Wandler.

Anstatt den Wirbelsensor 5 stromabwärts vom Staukörper 4 anzuordnen, kann er auch an der Mantelfläche 41 angeordnet sein, insb. in sie fluchtend und dicht eingesetzt sein, wobei die elektrischen Zuleitungen des Wirbelsensors in einer Bohrung des Staukörpers geführt sind, die mit dem Fluid nicht in Verbindung steht.

Die Rauhigkeit der Mantelfläche 41 kann während deren Herstellung z.B. durch Schleifen mittels eines Schleifmittels erzeugt werden, dessen Korngröße in Abhängigkeit vom gewünschten Rauhigkeitsgrad gewählt werden kann.

In Fig. 2 ist in Draufsicht eine bevorzugte Ausgestaltung der Art der Rauhigkeit der Mantelfläche 41 des zylindrischen Staukörpers gezeigt: sie ist nämlich mit muldenartigen Vertiefungen 42 versehen. Diese haben bevorzugt untereinander die gleiche Form und sind gleichmäßig auf die Mantelfläche 41 verteilt, wobei sie sich nicht berühren oder in einander übergehen.

In Fig. 3 ist in Draufsicht eine andere bevorzugte Ausgestaltung der Art der Rauhigkeit der Mantelfläche 41 des zylindrischen Staukörpers gezeigt: sie ist hier ebenfalls mit muldenartigen Vertiefungen 42 versehen, die untereinander wieder die gleiche Form haben, aber bevorzugt ungleichmäßig auf die Mantelfläche 41 verteilt sind. Auch sie berühren sich nicht oder gehen nicht in einander über. Besonders vorteilhaft ist es, wenn in diesem Fall die Vertiefungen stochastisch verteilt sind.

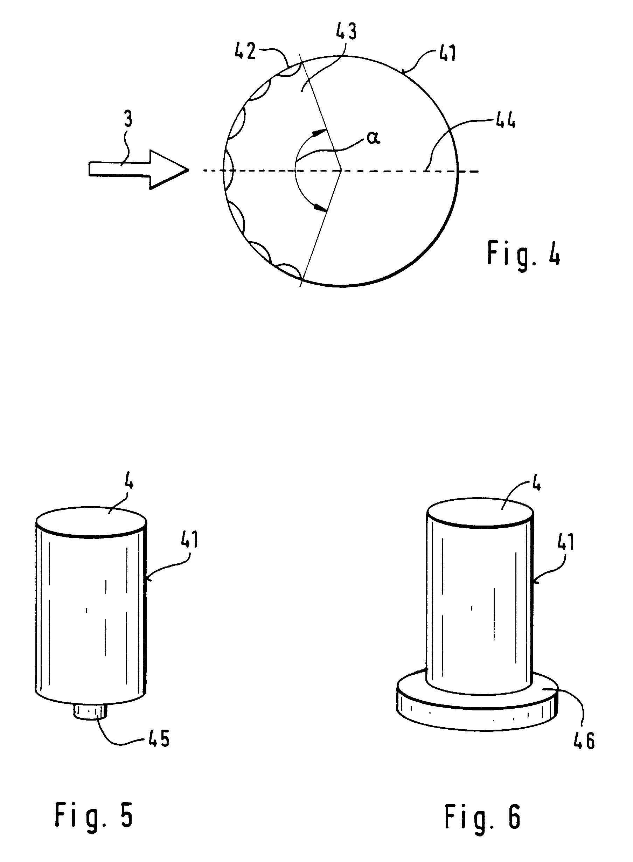

Wie die Fig. 4 zeigt, ist es nicht zwingend, daß Aufrauhungen bzw. die Vertiefungen 42 die gesamte Mantelfläche 41 bedecken. Es kann ausreichend sein, wenn Vertiefungen 42 lediglich auf derjenigen Seite des Staukörpers 4 vorgesehen sind, auf der er im Betrieb vom Fluid angeströmt wird. In diesem Fall wird also maximal gerade die dem anströmenden Fluid zugewandte Hälfte der Mantelfläche die Aufrauhungen bzw. Vertiefungen aufweisen.

Es kann jedoch auch ausreichen, nur einen Mantelsektor 43 damit zu versehen, dessen im Querschnitt vorhandener Winkel a kleiner als 180° ist und der symmetrisch zu einer Mittelachse 44 der Strömung liegt.

Zu den muldenartigen Vertiefungen 42 ist noch nachzutragen, daß sie zweckmäßigerweise sphärisch sind, also die Form einer flachen Kugelkalotte haben können.

Die oben als Aufgabe der Erfindung angegebene Verbesserung der Meßgenauigkeit wird mittels der Vertiefungen 42 aufgrund der folgenden Mechanismen erreicht: Bei einem Staukörper mit glatter Oberfäche ist der Ablöseort der Wirbel auf dieser Oberfläche lokal nicht konstant, sondern fluktuiert unregelmäßig, was zu Schwankungen der Ablösefrequenz der Wirbel führt. Die aufgerauhte Oberfläche nach der Erfindung, insb. die muldenartigen Vertiefungen, erzeugen hingegen definierte Turbulenzen, die den Ablöseort auf der Oberfläche des Staukörpers so stabilisieren, daß sich Wirbel immer an derselben Stelle ablösen.

In Fig. 5 ist eine Weiterbildung der Erfindung dargestellt, nach der der Staukörper 4 an seinem jeweiligen Ende mit einem verjüngten zylindrischen Endteil 45 versehen, das entlang seines Umfangs mit der Innenwand des Meßrohrs verbunden ist. In Fig. 5 ist der zeichnerischen Darstellung wegen nur ein Endteil gezeichnet und die Aufrauhung der Mantelfläche ist wieder weggelassen.

In Fig. 6 ist eine andere Weiterbildung der Erfindung dargestellt, nach der der Staukörper 4 an seinem jeweiligen Ende entlang seines Umfangs mit einem an der Innenwand des Meßrohrs angebrachten Podest 46 verbunden. In Fig. 6 ist der zeichnerischen Darstellung wegen nur ein Podest gezeichnet und die Aufrauhung der Mantelfläche wieder ist weggelassen.

Die verjüngten Endteile 45 bzw. die Podeste 46 dienen dazu, den Teil der Strömung in der Nähe der Innnenwand des Meßrohrs im Hinblick auf eine Erhöhung der Meßgenauigkeit von den näher zum Zentrum liegenden Teilen der Strömung zu entkoppeln. Störungen der Strömung, die an den Verbindungsstellen des Staukörpers mit der Innenwand entstehen bzw. dort exponentiell angefacht werden, werden nicht zur Mitte der Strömung, sondern zur Innenwand hin abgelenkt und stören damit die der Messung zugrunde liegenden Wirbel kaum noch.

## Patentansprüche

1. Wirbel-Strömungsaufnehmer (1) zur Messung der Strömungsgeschwindigkeit bzw. des Volumendurchflusses eines in einem Meßrohr (2) fließenden Fluids
- mit einem im Meßrohr angeordneten zylindrischen, einen kreisförmigen Querschnitt und eine Mantelfläche (41) aufweisenden Staukörper (4), die mindestens teilweise aufgerauht ist, und
- mit einem einzigen Wirbelsensor (5), der auf von den Wirbeln erzeugte Druckschwankungen anspricht.

2. Wirbel-Strömungsaufnehmer nach Anspruch 1, bei dem die Mantelfläche (41) des zylindrischen Staukörpers (4) mit muldenartigen Vertiefungen (42) versehen ist.

3. Wirbel-Strömungsaufnehmer nach Anspruch 2, bei dem die muldenartigen Vertiefungen (42) untereinander die gleiche Form haben und gleichmäßig auf die Mantelfläche (41) verteilt sind.

4. Wirbel-Strömungsaufnehmer nach Anspruch 2, bei dem die muldenartigen Vertiefungen (42) untereinander die gleiche Form haben und ungleichmäßig, insb. stochastisch, auf die Mantelfläche (41) verteilt sind.

5. Wirbel-Strömungsaufnehmer nach Anspruch 2, bei dem die muldenartigen Vertiefungen (42) lediglich auf derjenigen Seite des Staukörpers (4) vorgesehen sind, auf der er im Betrieb vom Fluid angeströmt wird.

6. Wirbel-Strömungsaufnehmer nach Anspruch 5, bei dem die muldenartigen Vertiefungen (42) lediglich in einem Mantelsektor (43) vorgesehen sind, dessen im Querschnitt vorhandener Winkel (α) kleiner als 180° ist.

7. Wirbel-Strömungsaufnehmer nach Anspruch 1, bei dem der Staukörper (4) mit seinem jeweilige Ende entlang seines Umfangs mit der Innenwand des Meßrohrs (2) verbunden ist.

8. Wirbel-Strömungsaufnehmer nach Anspruch 1, bei dem der Staukörper (4) mit seinem jeweilige Ende entlang seines Umfangs mit einem an der Innenwand des Meßrohrs (2) angebrachten Podest (46) verbunden ist.

9. Wirbel-Strömungsaufnehmer nach Anspruch 1, bei dem der Staukörper (4) an seinem jeweiligen Ende mit einem verjüngten zylindrischen Endteil (45) versehen ist, das entlang seines Umfangs mit der Innenwand des Meßrohrs (2) verbunden ist.
